(19) Europäisches Patentamt
European Patent Office
Office européen des brevets

(11) Veröffentlichungsnummer: 0 000 403
B1

(12) # EUROPÄISCHE PATENTSCHRIFT

(45) Veröffentlichungstag der Patentschrift: 17.06.81

(51) Int. Cl.³: C 07 F 9/50, B 01 J 31/24

(21) Anmeldenummer: 78100422.1

(22) Anmeldetag: 18.07.78

(54) **Bis-phosphin-Metallkomplexe, Verfahren zu ihrer Herstellung, Hydrierungskatalysatoren aus diesen Komplexen und Hydrierungsverfahren unter Verwendung dieser Katalysatoren.**

(30) Priorität: 18.07.77 US 816235
28.06.78 GB 2815478

(43) Veröffentlichungstag der Anmeldung:
24.01.79 Patentblatt 79/2

(45) Bekanntmachung des Hinweises auf die Patenterteilung:
17.06.81 Patentblatt 81/24

(84) Benannte Vertragsstaaten:
CH DE FR GB NL

(56) Entgegenhaltungen:
DE - A - 2 161 200
JP - A - 51 101 956
US 3 345 392
US 3 978 101
US 4 010 181

JOURNAL OF AMERICAN CHEMICAL SOCIETY, 94, 6429—33 (1972)

(73) Patentinhaber: F. HOFFMANN-LA ROCHE & CO. Aktiengesellschaft
CH-4002 Basel (CH)

(72) Erfinder: Townsend, John Melvin
77 Orange Road
Montclair, N.J. (US)
Erfinder: Valentine, Donald Herman, Jr.
81 Lawrence Avenue
Highland Park N.J. (US)

(74) Vertreter: Lederer, Franz, Dr. et al,
Patentanwälte Lederer, Meyer Lucile-Grahn-Strasse 22
D-8000 München 80 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 403 B1

Bis-phosphin-Metallkomplexe, Verfahren zu ihrer Herstellung, Hydrierungskatalysatoren aus diesen Komplexen und Hydrierungsverfahren unter Verwendung dieser Katalysatoren

Die Erfindung bezieht sich auf Komplexe von Metallen der Gruppe Ib und IIb chiraler chelatbildender Bis-phosphine, ein Verfahren zu ihrer Herstellung und ihre Verwendung. Sie bezieht sich ferner auf lösliche Katalysatorsysteme, die für die enantioselektive Hydrierung prochiraler Olefine brauchbar sind und die durch Umsetzen der Komplexe mit einem Salz oder Komplex eines Metalls der Gruppe VIIIb zugänglich sind sowie unter Verwendung dieser Katalysatorsysteme durchgeführte asymmetrische Hydrierungen. Die erfindungsgemäß hergestellten Katalysatorkomponenten sind fest und haben den Vorteil, daß die Notwendigkeit der Anwendung langwieriger Reinigungstechniken, um ein hochgereinigtes chirales chelatbildendes Bis-phosphin zu erhalten, umgangen wird.

In JACS (94) S. 6430, 1972, der US—PS 3,978,101 sowie der US—PS 4,010,181 sind Rhodium Bis-phosphin Liganden als Hydrierungskatalysatoren beschrieben, jedoch nicht die Komplexe von chiralen, chelatbildenden Bis-Phosphinen mit Metallen der Gruppen Ib oder IIb.

Erfindungsgemäss werden Verbindungen der Formel

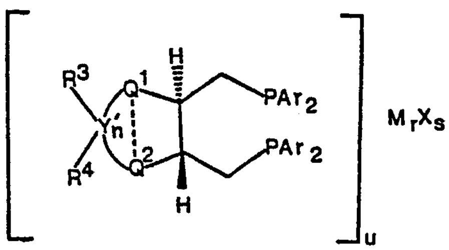

I

worin $R^3$ und $R^4$, $C_1$—$C_{20}$ Alkyl, oder einkerniges oder mehrkerniges Aryl, nämlich Phenyl, Naphthyl, Anthryl, Phenanthryl oder Azulyl sind, Y' Kohlenstoff, $Q^1$ und $Q^2$ Methylen oder Sauerstoff, P Phosphor, Ar substitutiertes oder unsubstituiertes Aryl, nämlich Phenyl, Naphthyl, Anthryl, Phenanthryl oder Azulyl, M ein Metall der Gruppe Ib oder IIb, X Halogenid, Perchlorat, Tetra(fluoro oder chloro)borat, Hexa(fluoro oder chloro)phosphat oder Hexa(fluoro oder chloro)antimonat oder Tetraphenylborat, n 0 oder 1 ist, mit der Maßgabe, daß, wenn $n = 0$, $Q^1$ und $Q^2$ Methylen sind und die gestrichelte Linie eine Kohlenstoff-Kohlenstoff-Bindung ist, und wenn $n = 1$, $Q^1$ und $Q^2$ Sauerstoff sind, wobei jedes Sauerstoff an Y' gebunden ist, u eine ganze Zahl von 1 bis 3, r und s 1 oder 2 in Abhängigkeit von der Wertigkeit von M und dem Wert von u sind, oder deren Dimere oder Oligomere zur Verfügung gestellt.

Bevorzugte Verbindungen der Formel I sind solche, bei denen $Q^1$ und $Q^2$ jeweils Sauerstoff bedeuten. Weiter bevorzugt sind Verbindungen, bei denen Ar m-Tolyl, Phenyl oder 3,5-Dimethylphenyl bedeutet, und auch solche, bei denen M Kupfer bedeutet.

Beispiele einzelner bevorzugter Verbindungen der Formel I sind folgende:

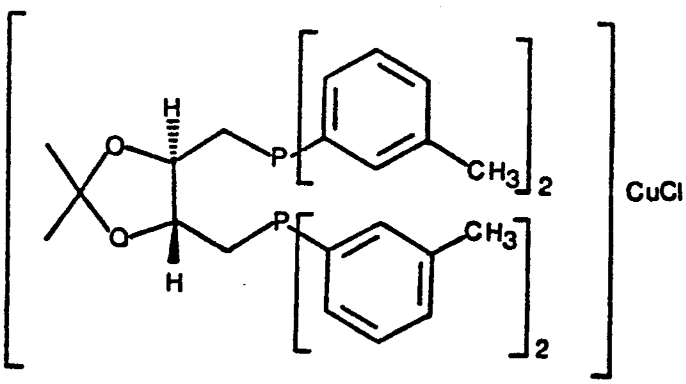

XV

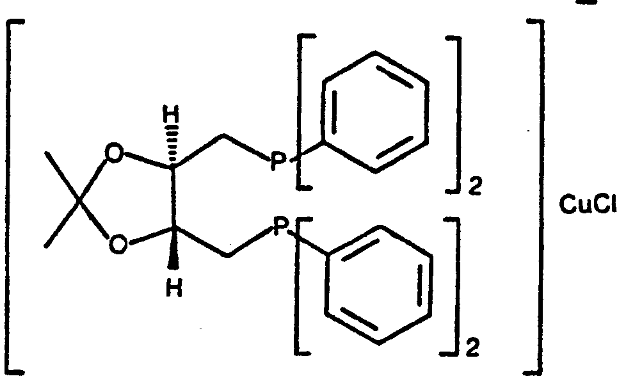

XVI

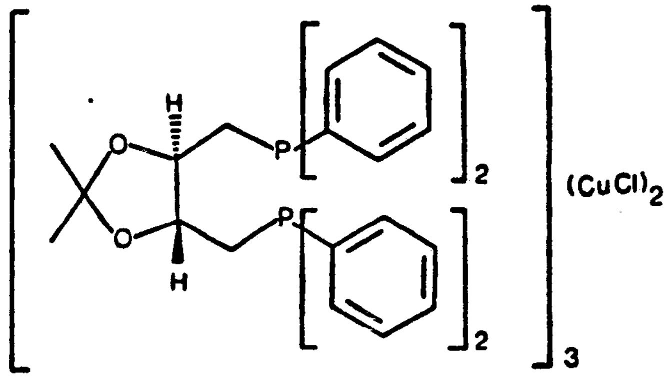

XVII

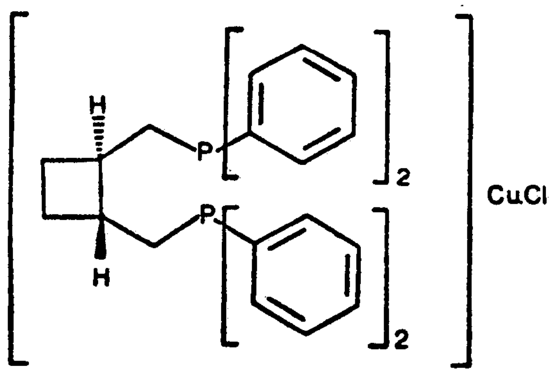

XVIII

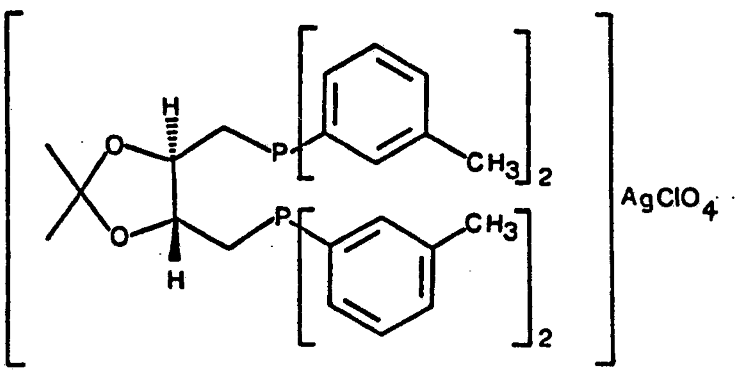

XIX

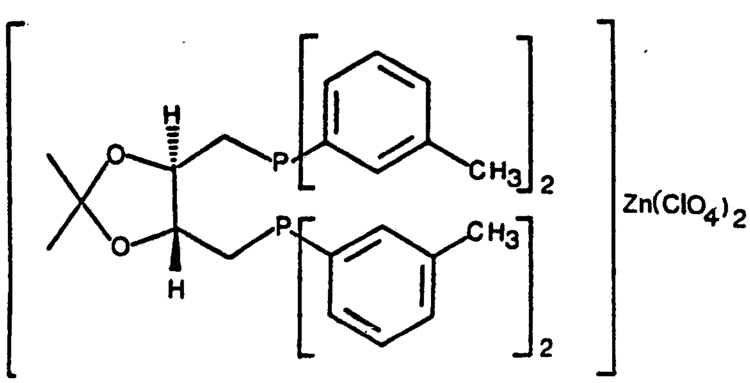

XX

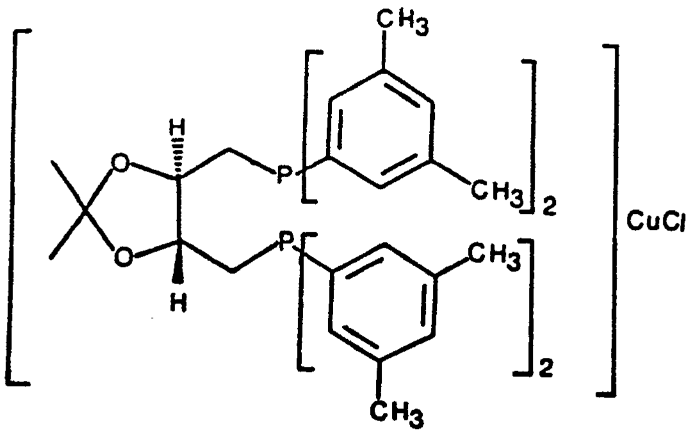

XXI

Die Verbindungen der Formel I können durch Umsetzen eines Verbindung der Formel

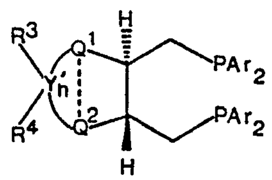

II

worin $Q^1$, $Q^2$, $R^3$, $R^4$, Y', Ar und n die obigen Bedeutungen haben, mit einer Verbindung der Formel $M_rX_s$, worin M, X, r und s die obigen Bedeutungen haben, hergestellt werden.

Erfindungsgemäß wird auch ein Verfahren zur Herstellung einer Hydrierkatalysatormasse zur Verfügung gestellt, das sich dadurch auszeichnet, daß man eine Verbindung der Formel

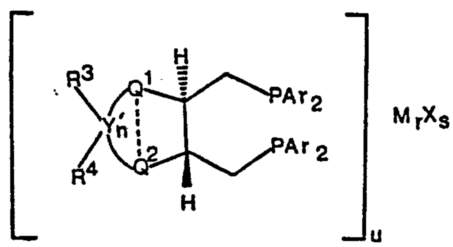

I

worin die Substituenten die obigen Bedeutungen haben, oder deren Dimer oder Oligomer mit einem Salz oder einem Komplex eines Metalls der Gruppe VIIIb, wie definiert, umsetzt. Der Komplex ist vorzugsweise ein Olefinkomplex.

Ein weiterer Aspekt der Erfindung betrifft die asymmetrische Hydrierung. Im einzelnen betrifft die Erfindung homogene Hydrierungen, katalysiert durch die Komplexe von Salzen von Metallen der Gruppe Ib und IIb mit chiralen tertiären Phosphinen der Formel I in Kombination mit Komplexen von Metallen der Gruppe VIIIb, wobei die Hydrierung enantioselektiv verläuft und zu optisch aktiven Verbindungen führt.

Erfindungsgemäß wird ferner auch ein Verfahren zur Herstellung von Verbindungen der Formel

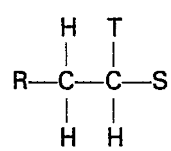

III

zur Verfügung gestellt, worin R Alkyl, Alkenyl, Aryl, substituiertes oder unsubstituiertes Indolyl mit Substituenten aus der Gruppe nieder-Alkyl und Halogen, S substituiertes Amino und T nieder-Alkyl, Aryl, Carboxy, nieder-Alkoxycarbonyl oder Carboxamido ist, durch enantioselektive Hydrierung von Verbindungen der Formel

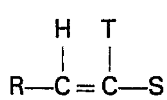

IV

worin R, S und T wie oben definiert sind, wobei die Hydrierung in einem Lösungsmittelmedium in Gegenwart des Hydrierkatalysators gemäß der Erfindung erfolgt. Die nach dem erfindungsgemäßen Verfahren hergestellten optisch aktiven Verbindungen werden als Enantiomeren-Gemisch mit einem Überschuß entweder an R- oder S-Enantiomeren erhalten. Das Enantiomer im Überschuß wird durch das verwendete chirale Phosphin und die isomere Form des Substrats, d.h. E oder Z, bestimmt.

Die Brauchbarkeit dieser neuen, Metall der Gruppe Ib und IIb enthaltenden chiralen Phosphine ist nicht auf Hydrierungen beschränkt. Diese Katalysatorkomponenten können zur Herstellung von Katalysatoren eingesetzt werden, um andere Reaktionen zu bewirken, wie enantioselektive Hydrosilylierungen, Hydroformylierungen und Hydroveresterungen, wenn sie mit geeigneten Komplexen von Metallen der Gruppe VIIIb kombiniert werden.

Der Ausdruck "chirales chelatbildendes Bis-phosphin", wie er hier verwendet wird, bezeichnet eine Verbindung mit zwei achiralen Phosphorzentren, die durch eine Kette mit 4 Kohlenstoffen, die chiral ist, getrennt sind.

Der Ausdruck "nieder-Alkyl" bezieht sich auf eine Alkylgruppe mit einer geraden oder verzweigten Kette mit 1 bis 6 Kohlenstoffatomen. Beispiele für solche Gruppen sind Methyl, Äthyl, Propyl, Isopropyl und 3-Methylbutyl. Der Ausdruck "Alkyl" bezieht sich auf eine Alkylgruppe mit 1 bis 20 Kohlenstoffatomen.

Der Ausdruck "Aryl" umfasst einkernige Arylgruppen, wie Phenyl und mehrkernige Arylgruppen, wie Naphthyl, Anthryl, Phenanthryl und Azulyl. Der Ausdruck "substituiertes Aryl" umfasst solche "Aryl"-Gruppen, die in einer oder mehreren Stellungen durch nieder-Alkyl, Nitro, Halogen oder eine elektronenabgebende Gruppe, wie nieder-Alkoxy, Amino oder Mono- oder Di-nieder-alkylamino substituiert sind.

Der Ausdruck "nieder-Alkenyl" bezieht sich auf eine Alkenyl-gruppe mit einer geraden oder verzweigten Kette mit 2 bis 6 Kohlenstoffatomen. Beispiele für solche Kohlenwasserstoffgruppen sind Vinyl, Propenyl, Butenyl, Hexenyl und 3-Methylbut-2-enyl. Der Ausdruck "Alkenyl" bezieht sich auf eine Alkenylgruppe mit 2 bis 20 Kohlenstoffatomen.

Der Ausdruck "nieder-Alkanol" bezieht sich auf ein Alkanol mit einer geraden oder einer verzweigten Kette mit 1 bis 7 Kohlenstoffatomen. Beispiele für solche Alkanole sind Methanol, Äthanol, Propanol und Isopropanol.

Der Ausdruck "nieder-Acyl" bezieht sich auf Acylgruppen mit 1 bis 6 Kohlenstoffatomen, wie Formyl, Acetyl und Butyryl.

Die Ausdrücke "Halo", "Halogen" oder "Halogenid" umfassen Chlor, Fluor, Brom und Jod.

Der Ausdruck "Acylamido" bezieht sich auf Amidogruppen mit 1 bis 6 Kohlenstoffatomen, wie Formamido, Acetamido und Propionamido.

Der Ausdruck "nieder-Alkoxycarbonyl" bezieht sich auf Carbonylgruppen mit daranhängenden nieder-Alkoxy-Resten mit 1 bis 6 Kohlenstoffatomen.

Der Ausdruck "nieder-Carboxylat" bezieht sich auf Carboxylgruppen mit 2 bis 7 Kohlenstoffatomen, wie z.B. Acetat, Propionat und Benzoat.

Der Ausdruck "enantiomerer Überschuß", wie er hier versendet wird, bezieht sich auf einen Zahlenwert, ausgedrückt in Prozent, der das Überwiegen eines Enantiomeren relativ zum anderen angibt, z.B. Überschuß des R-Enantiomeren, ausgedrückt als Prozent des R-Enantiomeren minus Prozent des S-Enantiomeren.

Die Ausdrücke "R- und S-Enantiomer" beziehen sich auf die Konfiguration der Substituenten am asymmetrischen Kohlenstoffatom in optisch aktiven organischen Verbindungen, wie in der üblichen IUPAC-Nomenklatur vorgeschrieben.

Die Ausdrücke "entgegen" (E) und "zusammen" (Z) beziehen sich auf die Anordnung von Substituenten an Kohlenstoff-Kohlenstoff-Doppelbindungen, wie in der Standard-IUPAC-Nomenklatur vorgeschrieben.

In schematischen Darstellungen der Molekülstrukturen bedeuten die Keile ( ▲ ), daß der Substituent über der Molekülebene liegt, die gestrichelten Linien (---) geben an, daß die Substituenten unter der Molekülebene liegen, und die Wellenlinien (~) geben an, daß die Substituenten entweder über oder unter der Molekülebene liegen können.

Erfindungsgemäß umfassen die Substrate für die Hydrierung Verbindungen der Formel IV mit Alkyl-, Alkenyl, Aryl-, Indolyl- (oder substituierten Indolyl-) Substituenten. Die Substituenten am Indolylrest können die gleichen sein, wie sie zuvor für Aryl angegeben wurden. Typische Verbindungen, die unter diese hier betrachteten Substrate fallen, sind z.B., ohne hierauf beschränkt zu sein, folgende:

$\alpha$-N-Acetylaminoacrylsäure;
$\alpha$-N-Acetylaminozimtsäure;
Methyl-$\alpha$-N-acetylaminocinnamat;
$\alpha$-N-Benzoylamino-(3-methoxy-4-hydroxyphenyl)-3-acrylsäure;
$\alpha$-N-Acetylamino-(3-methoxy-4-acetoxyphenyl)-3-acrylsäure;
Z-$\alpha$-N-Acetylamino-6-methylindol-3-acrylsäure;
Äthyl-Z-$\alpha$-N-acetylamino-(6-methylindol)-3-acrylat;
$\alpha$-N-Acetylamino-(4-hydroxyphenyl)-3-acrylsäure;
$\alpha$-N-Acetylamino-(3,4-methylendioxy)-3-acrylsäure und
$\alpha$-N-Acetylaminozimtsäureamid.

Das hier beschriebene Verfahren kann auf E- oder Z-Isomere der Verbindungen der Formel II oder deren Gemische angewandt werden. Um Produkte mit höherem Gehalt an Enantiomerenüberschuß zu erhalten, werden jedoch gewöhnlich bevorzugt ein reines Isomeres oder Gemische, in denen ein Isomeres überwiegt, verwendet. Die Verwendung des Z-Isomeren ist besonders bevorzugt.

Mit dem Ausdruck "Metalle der Gruppe VIIIb" sind Rhodium, Ruthen, Osmium, Palladium, Platin, Iridium, Eisen, Kobalt und Nickel gemeint. Die Metallsalze oder Metallkomplexe des Rhodiums sind besonders bevorzugt.

Mit dem Ausdruck "Metalle der Gruppe Ib und IIb" sind Kupfer, Silber, Gold, Zink, Cadmium und Quecksilber gemeint.

Geeignete Rhodiumsalze oder -komplexe sind z.B. $RhCl_3.nH_2O$, $Rh(Acetylacetonat)_3$, $[RhZ(Olefin)_2]_2$ und $[RhZ(Diolefin)]_2$, wobei Z Halogen-, nieder-Alkoxycarboxylat- oder nieder-Alkylderivate von Acetylaceton, vorzugsweise Acetylaceton selbst, bedeutet. Der hier verwendete Ausdruck "Olefin" bedeutet eine olefinische Verbindung, wie Äthylen, Propylen, und eine hier verwendete Ausdruck "Diolefin" bedeutet eine diolefinische Verbindung, wie 1,5-Hexadien, 1,5-Cyclooctadien oder Norbornadien. Bevorzugte Rhodiumsalze oder -komplexe sind z.B. $\mu,\mu'$ - Dichlor - bis - [bis(olefin)rhodium(I)], z.B., $\mu,\mu'$ - Dichlor - bis - [1,5-cyclooctadien - rhodium(I)] oder $\mu,\mu'$ - Dichlor - bis - [bis - (äthylen)rhodium(I)].

Bezüglich der Zwischenprodukte bezieht sich die Erfindung auch auf ein Verfahren zur Herstellung einer Verbindung der Formel

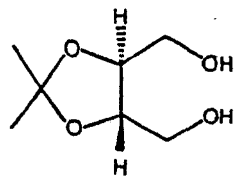

XIII

welches darin besteht, daß man eine Verbindung der Formel

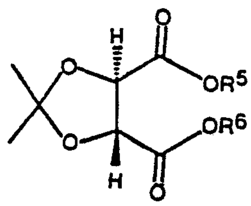

XIV

worin $R^5$ und $R^6$ Methyl oder Äthyl, vorzugsweise beide Äthyl, sind, mit $NaBH_4$ reduziert.

Eine Arbeitsweise zur Herstellung der Verbindungen der Formel I über alles ist wie folgt:

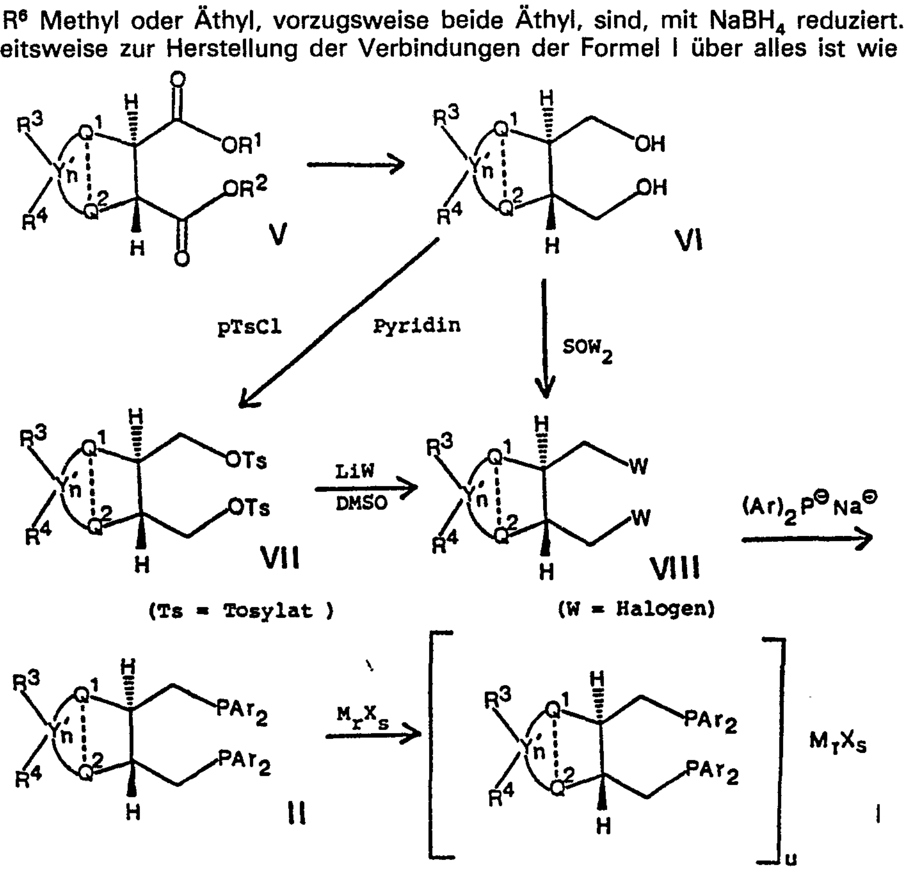

Ein bevorzugtes Ausgangsmaterial ist das Tosylat der Verbindung VII. Das Ditosylat im obigen Schema, das nach bekannten Verfahren hergestellt werden kann, wird mit einem Halogenierungsmittel behandelt, um das entsprechende Halogenid zu bilden. Das erhaltene Halogenid wird dann mit einem Alkalimetalldiarylphosphid, vorzugsweise Di-m-tolylphosphid, behandelt, um das rohe chirale chelatbildende Bis-phosphin zu bilden. Das chelatbildende Bis-Phosphin wird dann mit einem Salz eines Metalls der Gruppe Ib oder IIb behandelt, um die Verbindung der Formel I zu bilden.

Die Halogenierung des Ditosylats kann durch Behandeln mit einen Alkalimetallhalogenid erfolgen. Diese Reaktion wird im allgemeinen in einem polaren Lösungsmittel, wie Dimethylsulfoxid (DMSO), Dimethylformamid (DMF) oder Aceton durchgeführt.

Das anfallende Dihalogenid wird dann mit einem Alkalimetalldiarylphosphid, z.B. Di-m-tolylphosphid, behandelt, um das chirale chelatbildende Bis-diarylphosphin der Formel II zu ergeben. Diese Reaktion erfolgt im allgemeinen in einem Lösungsmittel, vorzugsweise flüssigem Ammoniak oder einem ätherischen Lösungsmittel, wie Diäthyläther oder Tetrahydrofuran. Diese Reaktion erfolgt im allgemeinen bei einer Temperatur von —33°C bis +50°C.

Das anfallende chirale chelatbildene Bis-phosphin II wird dann mit einem Salz eines Metalls der Gruppe Ib oder IIb umgesetzt, vorzugsweise mit Kupfer(I)chlorid, bevorzugt in einem niederen Alkanol als Lösungsmittel, vorzugsweise Äthanol. Wenngleich Temperatur und Druck unkritisch sind, wird die Reaktion im allgemeinen bei Atmosphärendruck und Rückflußtemperatur des Lösungsmittels durchgeführt.

Anstatt das Ditosylat als Ausgangsmaterial zu verwenden, kann dessen Alkoholvorstufe verwendet werden, eine Verbindung der Formel VI, die direkt in das Dihalogenid durch Behandeln mit herkömmlichen Halogenierungsmitteln, wie Thionylchlorid, Phosphortrihalogenid oder Phosphorpentahalogenid, überführt werden kann. Das Dihalogenid kann dann, wie oben beschrieben, zur Verbindung I weiter umgesetzt werden.

Verbindung VI, in der $Q^1$ und $Q^2$ Sauerstoff sind, kann aus dem Methyl- oder Äthylester der Weinsäure hergestellt werden. Der Methyl- oder Äthylester der Weinsäure wird in herkömmlicher Weise hergestellt. Die vorgenannten Ester werden dann in eine Verbindung der Formel V überführt, worin $R^1$ und $R^2$ Methyl oder Äthyl sind, in dem die Ester mit Acetondimethyl- oder -diäthylacetal behandelt werden.

Verbindungen der Formel VI, in denen $Q^1$ und $Q^2$ Methylen bedeuten, können aus den Methyl- oder Äthylestern der trans-1,2-Cyclobutandicarbonsäure hergestellt werden. Diese Ester der Formel V können in herkömmlicher Weise hergestellt werden.

Verbindung VI wird dann durch Reduktion einer Verbindung V hergestellt. Zu den für die Umwandlung der Verbindung V in die Verbindung VI verwendbaren Reduktionsmitteln gehören $LiAlH_4$, $NaBH_4$ und $NaAlH_2[OCH_2CH_2—O—CH_3]_2$ (Vitride). Bevorzugte Reduktionsmittel sind $LiAlH_4$ und $NaBH_4$. Letzteres ist das Reduktionsmittel der Wahl, wenn $R^1$ und $R^2$ in formel V Äthyl sind. Dies ist insbesondere der Fall, wenn $Q^1$ und $Q^2$ Sauerstoff und $R^3$ und $R^4$ Methyl bedeuten. Der dann erhaltene Alkohol der Verbindung VI kann weiter umgesetzt werden, um Verbindung I, wie oben beschrieben, zu bilden.

Die Verbindung der Formel I wird dann mit einem der Komplexe eines Metalls der Gruppe VIIIb umgesetzt, vorzugsweise mit Rhodiumkomplexen, wie sie oben erwähnt sind, um den neuen, asymmetrisch hydrierenden Katalysator gemäß der Erfindung zu bilden. Dieser Hydrierkatalysator wird im allgemeinen in situ gebildet und nicht isoliert, obgleich er, wenn gewünscht, isoliert und für spätere Verwendung gelagert werden kann.

Das Molverhältnis der Verbindung der Formel I zu der Quelle des Salzes eines Metalls der Gruppe VIIIb, die zur Bildung der hier verwendeten komplexen Katalysatoren umgesetzt wird, wird im allgemeinen so eingestellt, daß das Optimalverhältnis von Phosphin: Metall der Gruppe VIIIb erhalten wird. Im Falle des Rhodiums beträgt dieses bevorzugte Verhältnis 2 : 1 (d.h. ein Mol chirales chelatbildendes Diphosphin pro g-Atom Rhodium). Allgemein können Verhältnisse von 2 : 1 bis 10 : 1 angewandt werden. Höhere Verhältnisse können angewandt werden, dadurch werden aber keine besonderen Vorteile erzielt. Im Falle anderer Metalle der Gruppe VIIIb als Rhodium kann das Verhältnis Phosphin: Metall der Gruppe VIIIb von 1 : 1 bis etwa 10 : 1 variieren.

Das Molverhältnis des Substrats der Formel IV zum Katalysator kann vorzugsweise von etwa 1 : 1 bis etwa 5000 : 1 variieren, obgleich Verhältnisse > 5000 : 1 auch angewandt werden können.

Die bei dem hier offenbarten asymmetrischen Hydrierverfahren verwendeten bevorzugten Lösungsmittel können unter niederen Alkanolen alleine oder niederen Alkanolen in Kombination mit aromatischen Kohlenwasserstoffen oder gesättigten Alkanen oder Cycloalkanen oder niederen Alkanolen in Kombination mit Wasser gewählt werden. Die niederen Alkanole wurden zuvor bereits definiert. Der Ausdruck "aromatische Kohlenwasserstoffe" bezieht sich auf Benzol, Toluol, Xylol und dergleichen, wenngleich jeder inert aromatische Kohlenwasserstoff verwendet werden kann. Der Ausdruck "gesättigte Alkane oder Cycloalkane" bezieht sich auf Pentan, Hexan, Heptan, Cyclohexan und dergleichen, wenngleich jedes inerte gesättigte Alkan oder Cycloalkan mit 5 bis 20 Kohlenwasserstoffatomen verwendet werden kann.

Bei der Durchführung dieser Hydrierung sind Temperatur und Druck nicht kritisch. Die Temperatur kann zwischen etwa —30°C und etwa 150°C, vorzugsweise etwa 0°C und etwa 50°C liegen.

Der Druck kann zwischen etwa 0,14 und etwa 35 kg/cm², vvorzugsweise etwa 0,14 und 7,0 kg/cm² liegen (2—500, vorzugsweise 2—100 psi).

Das erfindungsgemäße Verfahren ist besonders an die Bildung von Tryptophanen der Formel

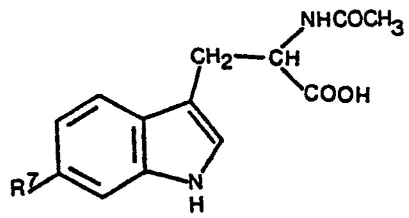

IX

anzupassen, worin $R^7$ Wasserstoff, nieder-Alkyl, insbesondere Methyl oder Halogen bedeutet, die als nährwertfreie Süßstoffe brauchbar sind. Die obigen Tryptophane werden durch asymmetrische Hydrierung bei einer Verbindung der Formel

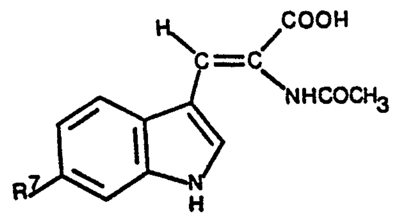

X

worin $R^7$ wie oben definiert ist, erhalten. Dieses Verfahren kann auch auf die asymmetrische Hydrierung der in der DE—OS 2 727 671 offenbarten Substrate angewandt werden.

Die Erfindung wird nun unter Bezugnahme auf die folgenden Beispiele weiter veranschaulicht. Alle Verhältnisse beziehen sich auf das Gewicht, sofern nicht anders angegeben. Die Keile und unterbrochenen Linien haben die zuvor beschriebene Bedeutung.

Der Enantiomerenüberschuß wurde gemäß folgender Gleichung berechnet:

Enantiomeren-Überschuß an R-Enantiomeren (in Prozent)

$$= 100 \left( 1 - \frac{2}{\left(1 + \frac{R}{S}\right)} \right)$$

worin der Parameter (R/S) durch quantitative flüssigkeitschromatographische Analyse diastereometrischer Dipeptidderivate der aus dem Hydrierungsprodukt durch Hydrolyse erhaltenen Aminosäure bestimmt wurde.

In den Beispielen Bezieht sich der Ausdruck "DIOP" auf (—) - 4R,5R - trans - 4,5 - Bis - (diphenylphosphinomethyl) - 2,2 - dimethyl - 1,3 - dioxolan. Ähnlich bezieht sich der Ausdruck "(3 - $CH_3$)DIOP" auf (—) - 4R,5R - trans - 4,5 - Bis - [di - (m - tolyl) - phosphinomethyl] - 2,2 - dimethyl - 1,3 - dioxolan und der Ausdruck "(3,5di$CH_3$)DIOP" bezieht sich auf (+) - 4R,5R - trans - 4,5 - Bis - ([di - 3,5 - dimethylphenyl] - phosphinomethyl) - 2,2 - dimethyl - 1,3 - dioxolan. BuDIOP bezieht sich auf (—) - 1R,2R - trans - 1,2 - Bis - (diphenylphosphinomethyl)cyclobutan.

## Beispiel 1

Teilweise gereinigtes (—) - 4R,5R - trans - 4,5 - Bis(di - (m - tolyl) - phosphinomethyl - 2,2 - dimethyl - 1,3 - dioxolan("(3 - $CH_3$) - DIOP") wurde durch Säulenchromatographie eines Produkts, erhalten durch Kombinieren von Natriumdi - (m - tolyl)phosphid mit dem Ditosylat der Formel XI, erhalten. Diese Chromatographie wandte 130 g Silicagel/g rohem Phosphin an.

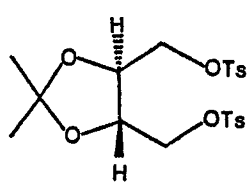

XI

Etwa 600 mg dieses teilweise gereinigten (3-$CH_3$)DIOP wurde mit 100 mg Kupfer(I)chlorid und 10 ml absolutem Äthanol zusammengebracht. Nach 5 min Rückfluß auf dem Dampfbad wurde die warme Lösung von Spuren nicht-umgesetztem Kupfer(I)chlorid dekantiert. Beim Abkühlen fiel das Produkt aus, und es wurden 530 mg farbloser Feststoff gewonnen. Umkristallisieren aus 8 ml siedendem absolutem Äthanol lieferte 500 mg (ca. 66%) farbloser Kristalle des (3-$CH_3$)DIOP-CuCl-Komplexes, Schmp. 108° (Zers.) $[\alpha]_D^{25}$ + 94,3° (3,0% Benzol).

Analyse ber. für $C_{35}H_{40}ClCuO_2P_2.C_2H_5OH$:

C 63, 50, H 6,63, P 9,16, Cu 9,38, Cl 5,19
gef. C 63,51, H 6,48, P 8,85, Cu 9,38, Cl 5,06

Beispiel 2

2,8 g rohes $(3\text{-}CH_3)$DIOP (Reinheit dünnschichtchromatographisch zu 70—80% ermittelt), erhalten durch Zusammenbringen von Lithiumdi(m-tolyl)phosphid (erhalten aus Di(m-tolyl)phosphin und n-BuLi) mit dem Dichlorid der Formel XII

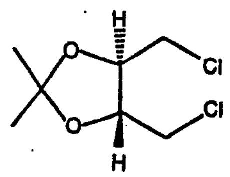

XII

wurde in 43 ml von Sauerstoff befreiten absoluten Äthanols gelöst und mit 0,5 g Kupfer(I)chlorid behandelt. Das Gemisch wurde auf dem Dampfbad 5 min rückflußgekocht, heiß filtriert und auf Raumtemperaur und schließlich auf 0° gekühlt. Eine kleine Menge harzartigen Feststoffs wurde abfiltriert und das Filtrat dann auf 10 ml eingeengt und wieder auf 0° gekühlt. Nach 2 Tagen bei 0° lieferte eine Filtration 1,6 g (ca. 54%, bezogen auf XII) eines nahezu weißen, rohen Feststoffs, $(3\text{-}CH_3)$DIOP-CuCl-Komplex, Schmp. 86—92° (Zers.).

Beispiel 3

0,452 g (—) - 1R,2R - trans - 1,2 - Bis - (diphenylphosphinomethyl) - cyclobutan und 0,1 g Kupfer(I)chlorid wurden mit absolutem Äthanol zusammengebracht und auf dem Dampfbad 5—10 min erwärmt. 0,3 g des rohen kristallinen (—) - 1R,2R - trans - 1,2 - Bis - (diphenylphosphinomethyl)-cyclobutan - Kupfer(I)chlorid - Komplexes wurden nach dem Kühlen erhalten. Umkristallisieren aus Äthanol ergab 0,15 g reinen Komplex, Schmp. 197—199,5°, $[\alpha]_D^{25}$ + 67,6° (1,0%, Chloroform).

Analyse ber. für $C_{30}H_{30}ClCuP_2$:

C 65,34, H 5,48, Cu 11,52, Cl 6,43, P 11,23
gef. C 65,48, H 5,27, Cu 11,53, Cl 6,34, P 11,52

Beispiel 4

0,328 g (+) - 4R,5R - trans - 4,5 - Bis([di - 3,5 - dimethylphenyl] - phosphinomethyl) - 2,2 - dimethyl - 1,3 - dioxolan ("(3,5-di-$CH_3$) DIOP") und 0,053 g Kupfer(I)chlorid wurden mit 4 ml absolutem Äthanol zusammengebracht und 5 min rückflußgekocht. Die Lösung wurde heiß filtriert, um Spuren nichtumgesetzten Kupfer(I)chlorids zu entfernen und gekühlt, um 0,324 g (85%) Rohprodukt zu ergeben. Umkristallisieren aus Äthanol ergab 0,238 g (+) - 4R,5R - trans - 4,5 - Bis([di - 3,5 - dimethylphenyl] - phosphinomethyl) - 2,2 - dimethyl - 1,3 - dioxolan - Kupfer(I)chlorid - Komplex, der etwa 0,67 Mol Äthanol enthielt, Ausbeute 62%, Schmp. 129—131°, $[\alpha]_D^{25}$ 42,5° (1,0% Chloroform).

Analyse ber. für $C_{39}H_{48}ClCuO_2P_2.0{,}67\ CH_3CH_2OH$:

C 65,42, H 7,08, Cl 4,79, P 8,36
gef. C 65,31, H 7,32, Cl 4,76, P 9,44

Beispiel 5

0,5 g (—) - 4R,5R - trans - 4,5 - Bis(diphenylphosphinomethyl) - 2,2 - dimethyl - 1,3 - dioxolan, ("DIOP) und 0,099 g Kupfer(I)chlorid wurden in 8 ml absolutem Äthanol 5 min rückflußgekocht, filtriert und auf Raumtemperatur gekühlt. Fiel kein Komplex aus, wurde das Äthanol bei vermindertem Druck entfernt und der Rückstand (0,34 g) aus Cyclohexan kristallisiert. Es wurden 0,273 g (45%) farblose Kristalle erhalten, Schmp. 116—118° des "tieferschmelzenden" DIOP-CuCl-Komplexes. Die Mikroanalyse dieses Materials ließ die Bildung von $(CuCl)_2(DIOP)_3$. 1,5 Cyclohexan vermuten.

Analyse ber. für $C_{93}H_{96}Cu_2Cl_2O_6P_6.C_9H_{18}$:

C 67,31, H 6,31, Cl 3,90, P 10,21
gef. C 67,28, H 6,46, Cl 3,75

## Beispiel 6

Unter Anwendung des allgemeinen Verfahrens des Beispiels 5 wurden 1,0 g DIOP und 0,198 g Kupfer(I)chlorid in 20 ml absolutem Äthanol rückflußgekocht, in diesem Falle aber wurde das Gemisch 15 min rückflußgekocht, bis die Produktkristalle sich aus der heißen Lösung abzuscheiden begannen. Der durch Filtrieren erhaltene Feststoff wurde in Chloroform gelöst und wieder filtriert, um Spuren nicht-umgesetzten Kupfer(I)chlorids zu entfernen. Das Chloroform wurde entfernt und das zurückgebliebene Pulver (0,763 g, 63%, Schmp. 211—212,5°) wurde zweimal aus 1 : 1 Benzol/Methanol kristallisiert, um 0,15 g reinen "hochschmelzenden" DIOP-CuCl-Komplex, Schmp. 211—212°, $[\alpha]_D^{25}$ 36,5° (1,0%, Chloroform) zu ergeben.

Analyse ber. für $C_{31}H_{32}ClCuO_2P_2$:

C 62,31, H 5,40, Cl 5,93, P 10,37, Cu 10,63
gef. C 62,30, H 5,38, Cl 5,69, P 10,69, Cu 10,90

## Beispiel 7

Äquivalente Mengen (3-$CH_3$)-DIOP (0,393 g) und Silberperchlorat (0,147 g) wurden zusammengebracht und in 4 ml absolutem Äthanol rückflußgekocht. Das Produkt begann sich innerhalb Sekunden abzuscheiden. Nach 5 min wurde das Gemisch gekühlt und filtriert und ergab 0,354 g (65%) analytisch reinen (3-$CH_3$)-DIOP-$AgClO_4$-Komplex, Schmp. 231—233° (Zers.), $[\alpha]_D^{25} - 30,4°$ (1,0%, Chloroform).

Analyse ber. für $C_{35}H_{40}AgClO_6P_2$:

C 55,17, H 5,29, Cl 4,65, P 8,13
gef. C 55,05, H 5,24, Cl 4,91, P 8,32

## Beispiel 8

Zinkperchlorat-Hexahydrat (0,324 g) und (3-$CH_3$)-DIOP (0,527 g, 10% Überschuß) wurden unter Argon in 5 ml von Sauerstoff befreitem absolutem Methanol 18 h rückflußgekocht. Nach dem Kühlen wurde die Lösung zur Trockne eingeengt und der Rückstand (0,714 g) wurde nacheinander mit Äther, Benzol, Wasser und Äther/Petroläther verrieben. Der farblose (3-$CH_3$)-DIOP-$Zn(ClO_4)_2$-Komplex-Rückstand (0,58 g, 69%) hatte nach der Mikroanalyse und dem Auftreten einer mäßigen -OH-Streckschwingungsabsorption im IR-Spektrum offenbar eine geringfügige Hydrolyse erfahren.

Analyse ber. für $C_{35}H_{40}Cl_2O_{10}P_2Zn$:

C 51,33, H 4,92, Cl 8,66
gef. C 52,18, H 5,18, Cl 8,58

## Beispiel 9

Eine Aufschlämmung von 2,0 g Z-$\alpha$-N-Acetylamino-6-methylindol-3-acrylsäure und 8,5 ml von Sauerstoff befreitem Methanol wurde unter anaeroben Bedingungen mit 1,49 ml einer Katalysatorlösung behandelt, die aus 14,7 x $10^{-3}$ g (3-$CH_3$)-DIOP-CuCl-Äthanolat-Komplex hergestellt wie in Beispiel 1,5,2 x $10^{-3}$ g $\mu,\mu'$-Dichlor-bis-[1,5-cyclooctadien-rhodium(I)] und 25 ml Methanol hergestellt worden war. Diese Katalysatorlösung enthält 0,78 x $10^{-3}$ g Katalysator pro ml Lösung; so entspricht die Verwendung von 1,49 ml einem Substrat/Katalysator-Gewichtsverhältnis von 1720/1. Das Reaktionsgemisch wurde in einen Druckbehälter gebracht und unter anfänglichem Wasserstoffdruck von 2,80 kg/cm² Manometer (40 psig) bei 23°C gerührt. Nach 1 h 50 min waren etwa 86% des endgültigen Druckabfalls erfolgt, und das Gemisch wurde homogen. Nach 14 h wurde keine weitere Druckänderung beobachtet. Entfernen des Lösungsmittels hinterließ 2,0 g (100%) R-(—)-N-Acetyl-6-methyltryptophan mit $[\alpha]_D^{25} - 22,09°$ (c = 1,0%, $CH_3OH$). Das R/S-Enantiomeren-Verhältnis wurde für die durch Hydrolyse des Hydrierungsprodukts erhaltene rohe Aminosäure bestimmt. Es wurde ein Enantiomerenüberschuß des R-Enantiomeren von 84,4% festgestellt, d.H. 92,2 Teile R-Enantiomer und 7,8 Teile S-Enantiomer, und zwar nach einer quantitativen analytischen Abtrennung diastereomerer Dipeptidderivate der Aminosäure.

## Beispiel 10

Unter Anwendung der allgemeinen Methode des Beispiels 9 wurden 2,0 g Z-$\alpha$-N-Acetylamino-3-acrylsäure in einem Druckbehälter mit 9,0 ml Methanol und insgesamt 2,4 ml Katalysatorlösung vereinigt, hergestellt aus 20,5 x $10^{-3}$ g CuCl-(3-$CH_3$)-DIOP-Komplex, hergestellt wie in Beispiel 2, 7,0 x $10^{-3}$ g $\mu,\mu'$-Dichlor-bis-[1,5-cyclooctadienrhodium(I)] und 25 ml Methanol. Das Substrat/Katalysator-Gewichtsverhältnis war somit 755/1. Die Katalysatorlösung wurde in 3 Anteilen im Verlauf der Hydrierung zugegeben. Hörte die Druckänderung auf, wurde das Lösungsmittel entfernt, um R-(—)-N-Acetyl-6-methyl-tryptophan zu ergeben, $[\alpha]_D^{25} - 21,3°$. Das Produkt zeigte einen Enantiomeren-Überschuß des R-Enantiomeren von 82% nach der Aminosäure-Analyse.

Beispiel 11

Eine Hydrierreaktion wurde unter Anwendung des allgemeinen Verfahrens des Beispiels 9 durchgeführt mit der Ausnahme, daß der Katalysator aus 3,1 ml einer Lösung bestand, die aus 2,5 × $10^{-3}$ g (—)-1R,2R-trans-1,2-Bis(diphenylphosphinomethyl)cyclobutan-CuCl-Komplex, 1,1 × $10^{-3}$ g $\mu,\mu'$-Dichlor-bis-[1,5-cyclooctadienrhodium(I)] und 10 ml Methanol hergestellt wurde. Dies entspricht einem Substrat/Katalysator-Gewichtsverhältnis von 1790/1. Das nach der Hydrierung erhaltene R-(—)-N-Acetyl-6-methyltryptophan mit $[\alpha]_D^{25}$ — 17,57° zeigte einen Enantiomeren-Überschuß des R-Enantiomeren von 60,4% nach der Aminosäureanalyse.

Beispiel 12

Unter Anwendung der allgemeinen Methode des Beispiels 9 wurde eine Hydrierung durchgeführt, wobei als Katalysator 2,3 ml einer Lösung verwendet wurden, die aus 8,1 × $10^{-3}$ g CuCl-(3,5-di-$CH_3$)-DIOP-Komplex, 2,8 × $10^{-3}$ g $\mu,\mu'$-Dichlor-bis-[1,5-cyclooctadienrhodium(I)] und 25 ml Methanol hergestellt worden war. Dies ergibt ein Substat/Katalysator-Gewichtsverhältnis von 2000/1. Das Produkt R-(—)-N-Acetyl-6-methyltryptophan aus der Hydrierung mit $[\alpha]_D^{25}$ — 22,88° zeigte einen Enantiomeren-Überschuß des R-Enantiomeren von 87% nach der Aminosäureanalyse.

Beispiel 13

Unter Anwendung des allgemeinen Verfahrens des Beispiels 9 erfolgte eine Hydrierung, wobei als Katalysator 1,14 ml einer Lösung verwendet wurden, die aus 17,2 × $10^{-3}$ g CuCl-DIOP-Komplex, hergestellt wie in Beispiel 5, 6,4 × $10^{-3}$ g $\mu,\mu'$-Dichlor-bis-[1,5-cyclooctadienrhodium(I)] und 25 ml Methanol hergestellt worden war. Dies ergibt ein Substrat/Katalysator-Gewichtsverhältnis von ca. 2000/1. Das bei der Hydrierung anfallende Produkt R-(—)-N-Acetyl-6-methyltryptophan mit $[\alpha]_D^{25}$ — 20,85° zeigte einen Enantiomerenüberschuß des R-Enantiomeren von 73% nach der Aminosäure-Analyse.

Beispiel 14

Unter Anwendung der allgemeinen Methode des Beispiels 9 wurde eine Hydrierung durchgeführt, wobei als Katalysator 1,0 ml einer Lösung verwendet wurde, die aus 7,6 × $10^{-3}$ g DIOP-CuCl-Komplex, hergestellt wie in Beispiel 6, 3,1 × $10^{-3}$ g $\mu,\mu'$-Dichlor-bis[1,5-cyclooctadienrhodium(I)] und 10 ml Methanol hergestellt worden war. Dies ergibt ein Substrat/Katalysator-Gewichtsverhältnis von ca. 2000/1. Das aus der Hydrierung stammende Produkt, R-(—)-N-Acetyl-6-methyltryptophan, mit $[\alpha]_D^{25}$ — 19,8° zeigte einen Enantiomeren-Überschuß des R-Entantiomeren von 75,4% nach der Aminosäureanalyse.

Beispiel 15

Unter Anwendung der allgemeinen Methode des Beispiels 9 erfolgte eine Hydrierung, wobei als Katalysator 2,35 ml einer trüben Lösung verwendet wurden, die frisch aus 12,4 × $10^{-3}$ g $AgClO_4$-(3-$CH_3$)-DIOP-Komplex, hergestellt wie in Beispiel 7 beschrieben, 4,6 × $10^{-3}$ g $\mu,\mu'$-Dichlor-bis-[1,5-cyclooctadienrhodium(I)] und 10 ml Methanol hergestellt worden war. Dies ergibt ein Substrat/Katalysator-Gewichtsverhältnis von 500/1. Das bei der Hydrierung anfallende Produkt, R-(—)-N-acetyl-6-methyltryptophan mit $[\alpha]_D^{25}$ — 22,87° zeigte einen Enantiomeren-Überschuß des R-Enantiomeren von 81,4% nach der Aminosäure-Analyse.

Beispiel 16

Unter Anwendung der allgemeinen Methode des Beispiels 9 erfolgte eine Hydrierung, wobei als Katalysator 1,8 ml einer Lösung verwendet wurden, die aus 16,9 × $10^{-3}$ g festem Komplex, hergestellt aus $Zn(ClO_4)_2$ und (3-$CH_3$)-DIOP, wie in Beispiel 8 beschrieben, 5,1 × $10^{-3}$ g $\mu,\mu'$-Dichlor-bis-[1,5-cyclooctadienrhodium(I)] und 10 ml Methanol hergestellt worden war. Dies gibt ein Substrat/Katalysator-Gewichtsverhältnis von ca. 500/1. Das bei der Hydrierung anfallende Produkte, R-(—)-N-acetyl-6-methyltryptophan mit $[\alpha]_D^{25}$ — 22,92° zeigte einen Enantiomeren-Überschuß des R-Enantiomeren von 81,6% nach der Aminosäure-Analyse.

Beispiel 17

Eine Aufschlämmung von 0,5 g Z-$\alpha$-N-Acetylaminoindol-3-acrylsäure und 1,5 ml von Sauerstoff befreitem Methanol wurde mit 1,0 ml einer Katalysator-Lösung, hergestellt aus 8,0 × $10^{-3}$ g CUCl. BUDIOP-Komplex (hergestellt wie in Beispiel 3), 3,5 × $10^{-3}$ g $\mu,\mu'$-Dichloro-bis-[1,5-cyclooctadienrhodium(I)] und 10 ml Methanol, behandelt. Dies ergab ein Substrat/Katalysator-Gewichtsverhältnis von 435/1. Das Reaktionsgemisch wurde bei 23°C unter einem Wasserstoffdruck von 1 kg/$cm^2$ gerührt. Nach 20 min wurde das Gemisch homogen. Nach 18 h wurde die Lösung eingeengt, um 0,5 g (100%) R-(—)-N-Acetyltryptophan, $[\alpha]_D^{25}$ — 20,0°, 80% optische Reinheit entsprechend zu ergeben. Das R/S-Enantiomeren-Verhältnis wurde für das rohe Tryptophan, erhalten durch Hydrolyse des Hydrierungsprodukts, unter Anwendung einer analytischen Chromatographietechnik ähnlich der des Beispiels 9, bestimmt. Bei diesem Ansatz wurde ein Enantiomeren-Überschuß an R-(—)-N-Acetyltryptophan von 81,2% gefunden.

Beispiel 18

Unter Anwendung der allgemeinen Methode des Beispiels 17 wurde eine Hydrierung durchgeführt, wobei als Katalysator 1,0 ml einer Lösung verwendet wurde, hergestellt aus 22,3 x $10^{-3}$ g CuCl . (3-$CH_3$)DIOP-Komplex (hergestellt wie in Beispiel 1), 7,7 x $10^{-3}$ g $\mu,\mu'$-Dichloro-bis-1,5-cyclooctadienrhodium(I)] und 25 ml Methanol. Das bei der Hydrierung anfallende Produkt R-(—)-N-Acetyltryptophan, mit $[\alpha]_D^{25} - 20,5°$ (82% optische Reinheit) hatte einen Enantiomeren-Überschuß des R Enantiomeren von 83% nach der Aminosäure-Analyse.

Beispiel 19

Unter Anwendung der allgemeinen Methode des Beispiels 17 wurde eine Hydrierung durchgeführt, wobei als Katalysator 1,0 ml einer Lösung verwendet wurde, hergestellt aus 10,8 x $10^{-3}$ g CuCl . (3,5-di$CH_3$)DIOP-Komplex (hergestellt wie in Beispiel 4), 3,7 x $10^{-3}$ g $\mu,\mu'$-Dichloro-bis-1,5-cyclooctadienrhodium(I)] und 10 ml Methanol. Das bei der Hydrierung anfallende Produkte, R-(—)-N-Acetyltryptophan, $[\alpha]_D^{25} - 21,8°$ (87% optische Reinheit), zeigte einen Enantiomeren-Überschuß des R-Enanatiomeren von 90,3% nach der Aminosäure-Analyse.

Beispiel 20

Ein 2 1-Kolben wurde mit 46,4 g Natriumboranat und 700 ml wasserfreiem Äthanol beschickt. Dieses Gemisch wurde tropfenweise mit einer Lösung von 100 g 4R,5R-trans-4,5-Bis(carbäthoxy)-2,2-dimethyl-1,3-dioxolan in 200 ml wasserfreiem Äthanol mit solcher Geschwindigkeit behandelt, daß mässiger Rückfluß und Gasentwicklung erhalten blieben. Klang die Reaktion ab, wurde das Gemisch rückflußgekocht, bis die Gasentwicklung aufhörte. Das Gemisch wurde zu einem dicken Brei eingeengt, in einem Eisbad gekühlt und mit 500 ml Chloroform behandelt. Unter kräftigem Rühren wurden 150 ml Wasser zugetropft. Die Aufschlämmung wurde 1 h gerührt und dann filtriert. Der Filterkuchen wurde mit 200 ml Chloroform gespült. Filtrat und Spüllösung wurden nach ihrer Vereinigung über $MgSO_4$ getrocknet, filtriert und zu 64,4 g (100 + %) rohen Diols der Formel XIII als farbloses Öl eingeengt. Das rohe Diol wurde in 400 ml trockenem Pyridin gelöst, auf —20°C gekühlt und mit 165 g p-Toluolsulfonylchlorid behandelt. Beim Stehenlassen des Gemischs bei 0°C für mehrere Tage trat Kristallisation des Ditosylats der Formel XI ein. Das Gemisch wurde in einem Eisbad gekühlt und tropfenweise mit 625 ml Wasser behandelt. Das Produkt wurde dann durch Filtrieren gesammelt, mit insgesamt 500 ml Wasser gespült und luftgetrocknet, um 190 g (ca. 100%) rohes Ditosylat der Formel XI zui ergeben, Schmp. 87—89°C.

Auf diese Weise aus 0,861 Mol Diäthylester der allgemeinen Formel V erhaltenes rohes Ditosylat wurde aus 1500 ml Äthanol umkristallisiert und ergab 313,3 g (77%) reines Ditosylat, Schmp. 89—91°C, $[\alpha]_D^{25} = - 11,6°C$ (c = 1,0, Chloroform).

**Patentansprüche**

1. Verbindung der Forme'

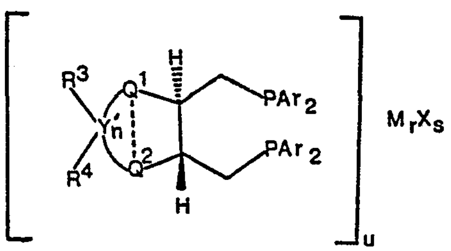

I

worin $R^3$ und $R^4$, $C_1$—$C_{20}$ Alkyl, oder Aryl, nämlich Phenyl, Naphthyl, Anthryl, Phenanthryl oder Azulyl sind, Y' Kohlenstoff, $Q^1$ und $Q^2$ Methylen oder Sauerstoff, P Phosphor, Ar substituiertes oder unsubstituiertes Aryl, nämlich Phenyl, Naphthyl, Anthryl, Phenanthryl oder Azulyl, M ein Metall der Gruppe Ib oder IIb, X Halogenid, Perchlorat, Tetra(fluoro oder chloro)borat, Hexa(fluoro oder chloro)phosphat oder Hexa(fluoro oder chloro)antimonat oder Tetraphenylborat, n 0 oder 1 ist, mit der Maßgabe, daß, wenn n = 0, $Q^1$ und $Q^2$ Methylen sind und die gestrichelte Linie eine Kohlenstoff-Kohlenstoff-Bindung ist, und wenn n = 1, $Q^1$ und $Q^2$ Sauerstoff sind, wobei jedes Sauerstoff an Y' gebunden ist, u eine ganze Zahl von 1 bis 3, r und s 1 oder 2 in Abhängigkeit von der Wertigkeit von M und dem Wert von u sind, oder deren Dimere oder Oligomere.

2. Verbindung nach Anspruch 1, worin $Q^1$ und $Q^2$ jeweils Sauerstoff bedeuten.

3. Verbindung nach Anspruch 1 oder 2, worin Ar m-Tolyl, Phenyl oder 3,5-Dimethylphenyl bedeutet.

4. Verbindung nach einem der Ansprüche 1—3, worin M Kupfer bedeutet.

5. Verbindung der Formel

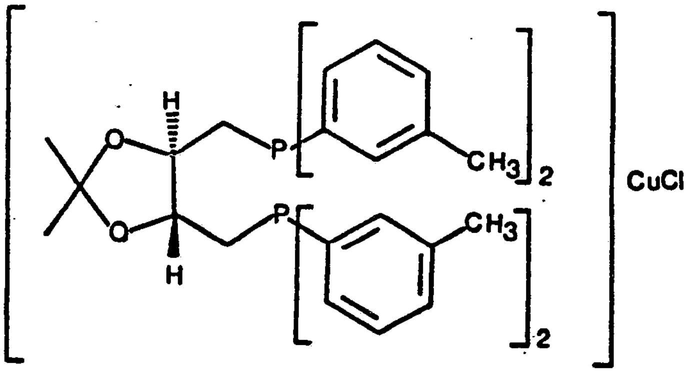

XV

6. Verbindung der Formel

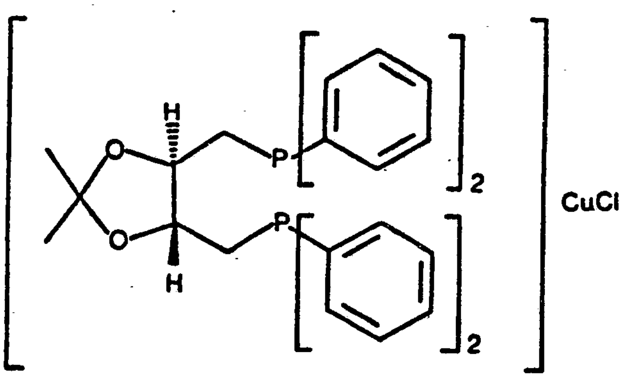

XVI

7. Verbindung der Formel

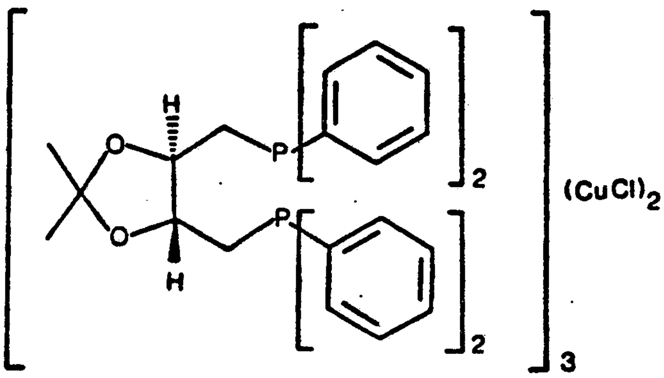

XVII

8. Verbindung der Formel

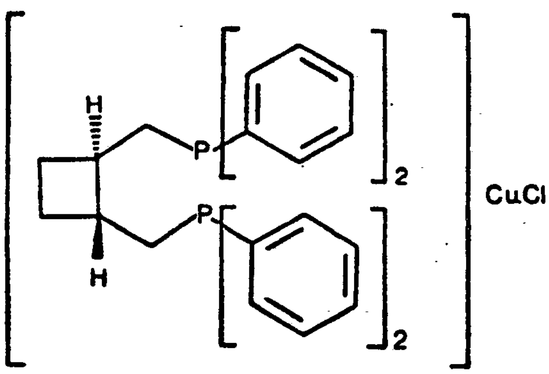

XVIII

9. Verbindung der Formel

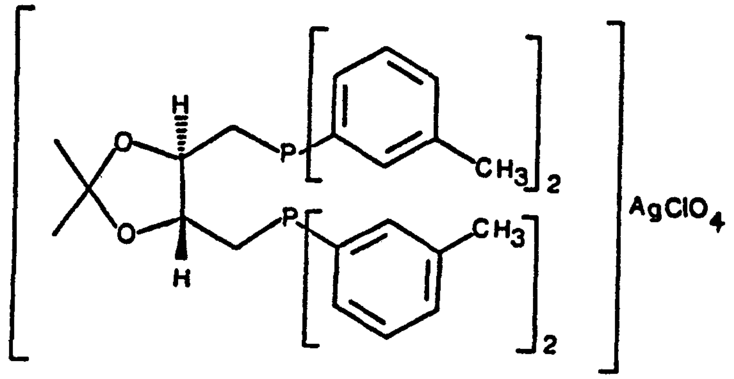

XIX

10. Verbindung der Formel

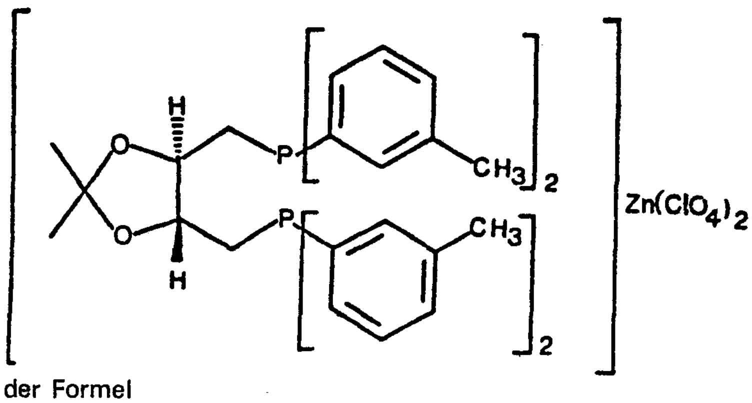

XX

11. Verbindung der Formel

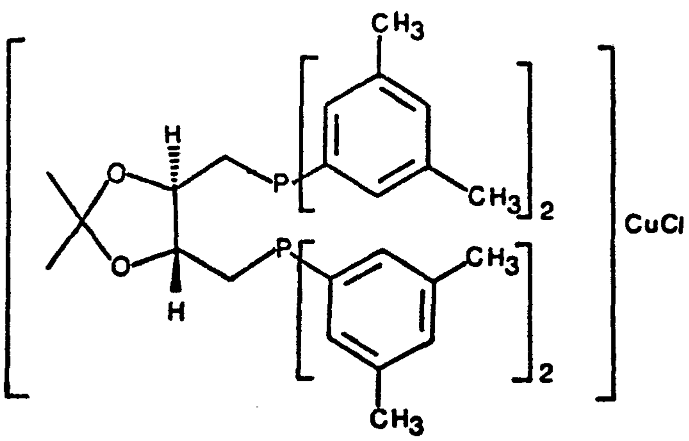

XXI

12. Verfahren zur Herstellung einer Verbindung der Formel

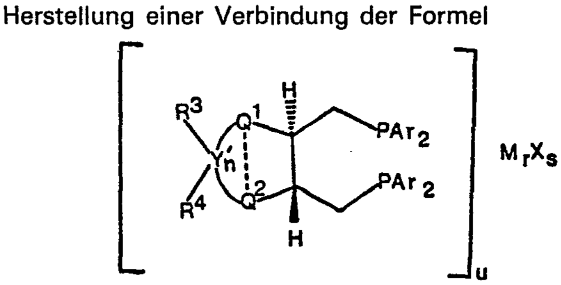

I

worin die Substituenten die in einem der Ansprüche 1—11 gegebene Bedeutung haben oder deren Dimere oder Oligomere, dadurch gekennzeichnet, daß eine Verbindung der Formel

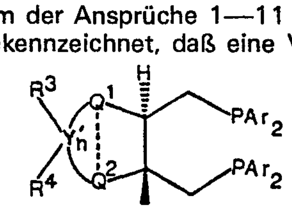

II

worin $Q^1$, $Q^2$, $R^3$, $R^4$, Y', Ar und n die obigen Bedeutungen haben, mit einer Verbindung der Formel

$$M_rX_s$$

worin X die obige Bedeutung hat, M ein Metall der Gruppe Ib oder IIb ist und r und s 1 oder 2 in Abhängigkeit von der Wertigkeit von M sind, umgesetzt wird.

13. Verfahren nach Anspruch 12, dadurch gekennzeichnet, daß die Reaktion in Lösung in einem niederen Alkanol durchgeführt wird.

14. Verfahren nach Anspruch 12 oder 13, dadurch gekennzeichnet, daß es in Äthanol als Lösungsmittel durchgeführt wird.

15. Verfahren nach Anspruch 14, dadurch gekennzeichnet, daß die Verbindung der Formel II durch Behandeln einer Verbindung der Formel

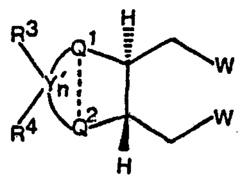

VIII

worin $Q^1$, $Q^2$, $R^3$, $R^4$, Y' und n die obigen Bedeutungen haben und W Halogen ist, mit einem Alkalimetalldiarylphosphid hergestellt wird.

16. Verfahren nach Anspruch 15, dadurch gekennzeichnet, daß die Verbindung der Formel VIII durch Behandeln einer Verbindung der Formel

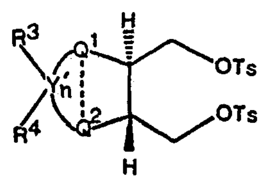

VII

worin Ts Tosylat ist und $Q^1$, $Q^2$, $R^3$, $R^4$, Y' und n die obigen Bedeutungen haben, mit einem Halogenierungsmittel hergestellt wird.

17. Verwendung einer Verbindung der Formel

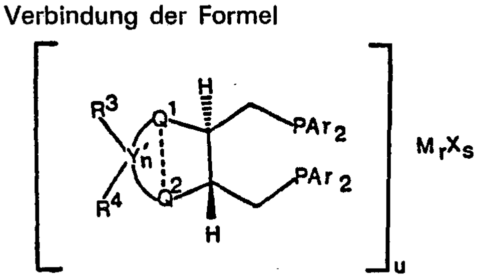

I

worin die Substituenten eine der in den Ansprüchen 1—11 gegebenen Bedeutungen haben oder deren Dimer oder Oligomer zur Herstellung eines Hydrierkatalysators durch Umsetzung mit einem Salz oder einem Komplex eines Metalls der Gruppe VIIIb, wie definiert.

18. Verwendung nach Anspruch 17, dadurch gekennzeichnet, daß als Metall der Gruppe VIIIb Rhodium eingesetzt wird.

19. Verwendung nach Anspruch 17, dadurch gekennzeichnet, daß als Metall der Gruppe VIIIb Palladium, Platin oder Ruthen verwendet wird.

20. Verwendung nach Anspruch 17, dadurch gekennzeichnet, daß als Salz oder Komplex eines Metalls der Gruppe VIIIb $\mu,\mu'$-Dichlor-bis-(1,5-cyclooctadienrhodium) oder $\mu,\mu'$-Dichlor-bis-[bis-(äthylen)-rhodium(I)] verwendet wird.

21. Verfahren zur Herstellung einer Verbindung der Formel

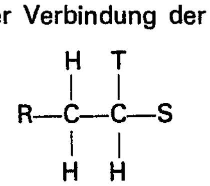

III

worin R Alkyl, Alkenyl, Aryl, substituiertes oder unsubstituiertes Indolyl, wobei die Substituenten nieder-Alkyl oder Halogen sind, S substituiertes Amino und T nieder-Alkyl, Aryl, Carboxy, nieder-Alkoxycarbonyl oder Carboxamido ist, dadurch gekennzeichnet, daß man ein Substrat der Formel

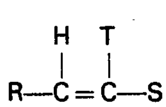

IV

worin R, S und T die oben angegebenen Bedeutungen haben, in einem Lösungsmittelmedium unter Verwendung eines Katalysators nach Anspruch 17 hydriert.

22. Verfahren nach Anspruch 21, dadurch gekennzeichnet, daß die Verbindung der Formel IV die Formel

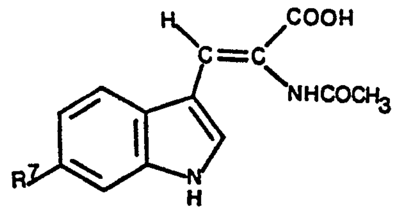

X

hat, worin $R^7$ Wasserstoff, nieder-Alkyl oder Halogen bedeutet, und in eine Verbindung der Formel

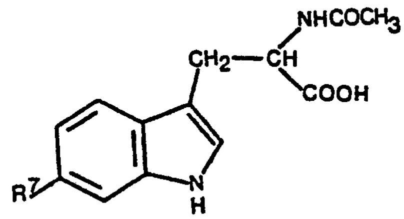

IX

worin $R^7$ die obige Bedeutung hat, überführt wird.

23. Verfahren nach Anspruch 22, dadurch gekennzeichnet, daß es mit $R^7$ = Methyl durchgeführt wird.

**Revendications**

1. Composé de formule

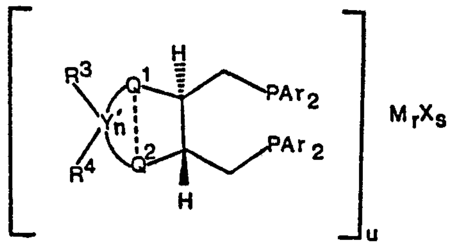

I

où $R^3$ et $R^4$ sont un groupe alcoyle en $C_1$ à $C_{20}$ ou un groupe aryle, à savoir phényle, naphtyle, anthryle, phénanthryle ou azulyle, Y' est un carbone; $Q^1$ et $Q^2$ sont le groupe méthylène ou l'oxygène; P est le phosphore; Ar est un groupe aryle substitué ou non-substitué, à savoir phényle, naphtyle, anthryle, phénanthryle ou azulyle, M est un métal du groupe Ib ou IIb, X est un halogénure, perchlorate, tétra(fluoro ou chloro)borate, hexa(fluoro ou chloro)phosphate, ou hexa(fluoro ou chloro)antimonate, ou le tétraphénylborate, n vaut 0 ou 1, avec la condition que, lorsque n = 0, $Q^1$ et $Q^2$ représentent le groupe méthylène et la ligne pointillée est une liaison carbone-carbone et que, lorsque n = 1, $Q^1$ et $Q^2$ sont des oxygènes, chaque oxygène étant lié à Y', u est un nombre entier allant de 1 à 3, r et s valent 1 ou 2 selon la valence de M et la valeur de u, ou ses dimères ou ologomères.

2. Composé selon la revendication 1, où $Q^1$ et $Q^2$ représentent tous les deux un oxygène.

3. Composé selon la revendication 1 ou 2, où Ar représente un groupe m-tolyle, phényle ou 3,5-diméthylphényle.

4. Composé selon l'une des revendications 1 à 3, où M représente le cuivre.

5. Composé de formule

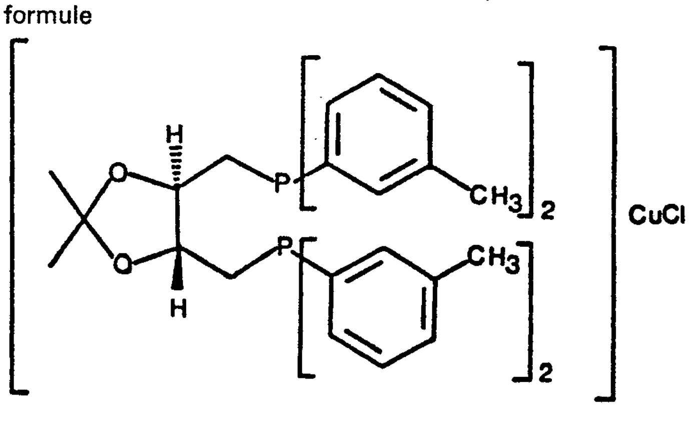

XV

6. Composé de formule

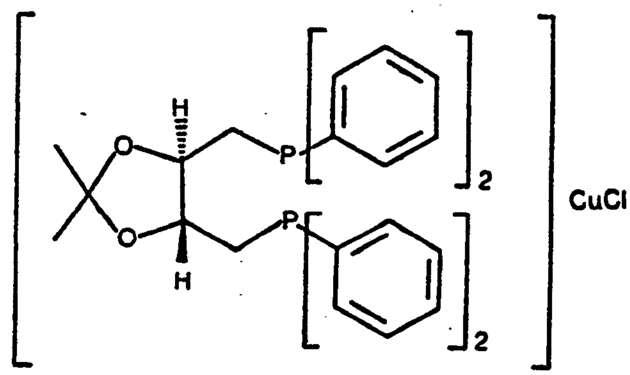

XVI

7. Composé de formule

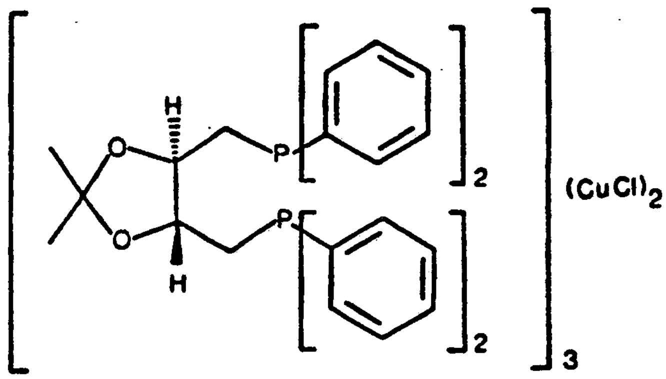

XVII

8. Composé de formule

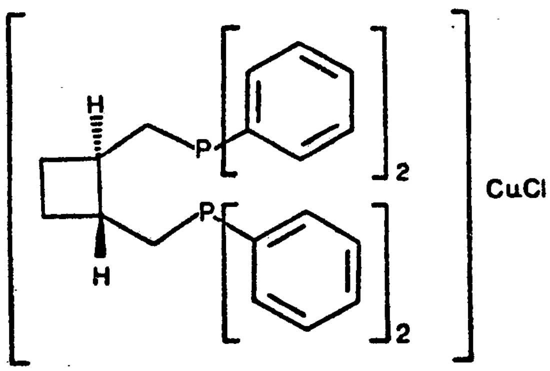

XVIII

9. Composé de formule

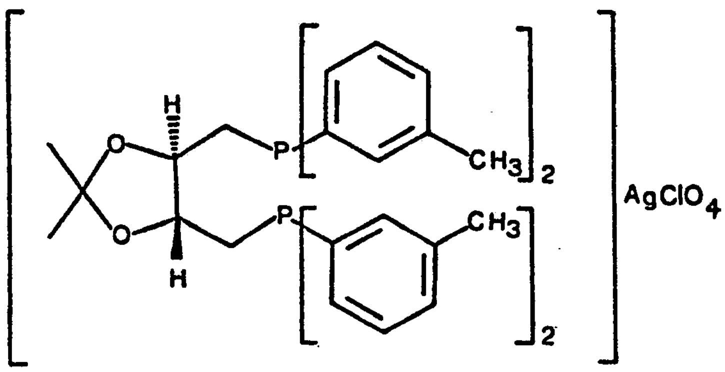

XIX

10. Composé de formule

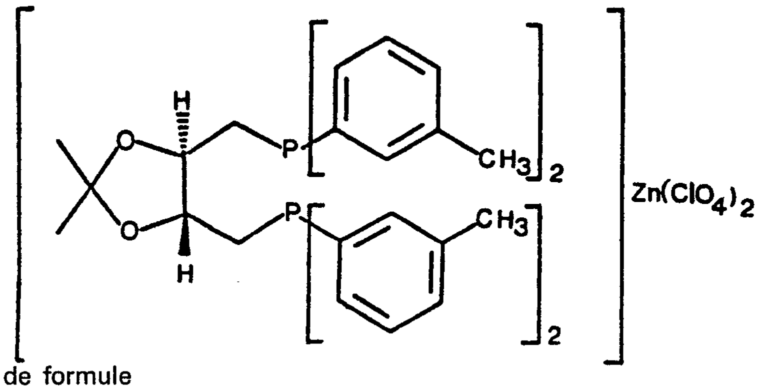

XX

11. Composé de formule

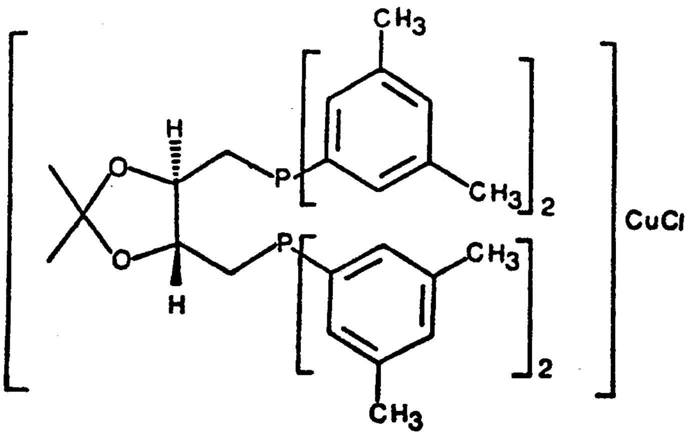

XXI

12. Procédé de préparation d'un composé de formule

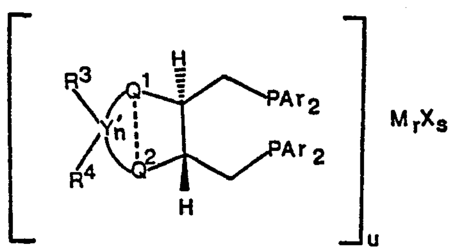

I

où les substituants ont les significations données dans l'une des revendications 1 à 11, ou de ses dimères ou oligomères, caractérisé en ce que l'on fait réagir un composé de formule

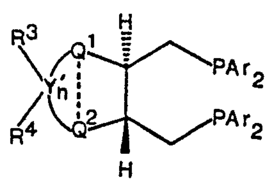

II

où $Q^1$, $Q^2$, $R^3$, $R^4$, Y', Ar et n ont les significations données ci-dessus, avec un composé de formule

$M_rX_s$

où X a la signification donnée ci-dessus, M est un métal du groupe Ib ou IIb; r et s valent 1 ou 2 selon la valence de M.

13. Procédé selon la revendication 12, caractérisé en ce que la réaction s'effectue en solution dans un alcanol inférieur.

14. Procédé selon la revendication 12 ou 13, caractérisé en ce que le solvant utilisé est l'éthanol.

15. Procédé selon la revendication 14, caractérisé en ce que le composé de formule II est préparé en traitant un composé de formule

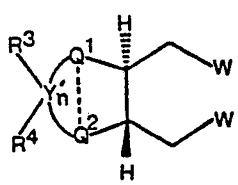

VIII

où $Q^1$, $Q^2$, $R^3$, $R^4$, Y' et n ont les significations données ci-dessus et W est un halogène, avec un diarylphosphure de métal alcalin.

16. Procédé selon la revendication 15, caractérisé en ce que l'on prépare le composé de formule VIII en traitant un composé de formule

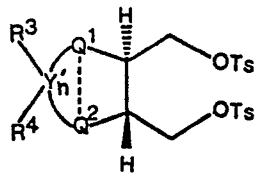

VII

où Ts est le tosylate et $Q^1$, $Q^2$, $R^3$, $R^4$, Y' et n ont les significations données ci-dessus, avec un agent d'halogénation.

17. Utilisation d'un composé de formule

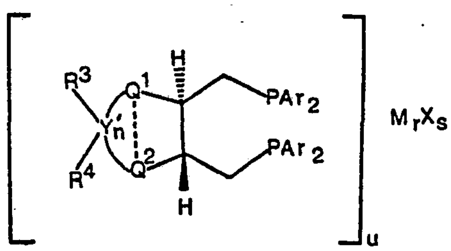

I

où les substituants ont les significations données dans l'une des revendications 1 à 11 ou de ses dimères ou oligomères pour la préparation d'un catalyseur d'hydrogénation par réaction avec un sel ou complexe d'un métal du groupe VIIIb tel que défini.

18. Utilisation selon la revendication 17, caractérisée en ce que le métal du groupe VIIIb utilisé est le rhodium.

19. Utilisation selon la revendication 17, caractérisée en ce que le métal du groupe VIIIb utilisé est le palladium, le platine ou le ruthénium.

20. Utilisation selon la revendication 17, caractérisé en ce que le sel ou complexe d'un métal du groupe VIIIb utilisé est le $\mu,\mu'$-dichloro-bis-(1,5-cyclooctadiènerhodium) ou le $\mu,\mu'$-dichloro-bis-[bis-(éthylène)rhodium(I)].

21. Procédé de préparation d'un composé de formule

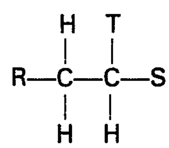

III

où R est un groupe alcoyle, alcényle, aryle, indolyle substitué ou non-substitué, lesdits substituants étant choisis parmi les groupes alcoyles inférieurs et les halogènes; S est un amino substitué et T est un groupe alcoyle inférieur, aryle, carboxy, alcoxycarbonyle inférieur ou carboxamido, caractérisé en ce que l'on hydrogène un substrat de formule

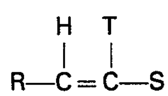

IV

où R, S et T ont les significations données ci-dessus, dans un milieu solvant en utilisant un catalyseur selon la revendication 17.

22. Procédé selon la revendication 21, caractérisé en ce que le composé de formule IV répond à la formule

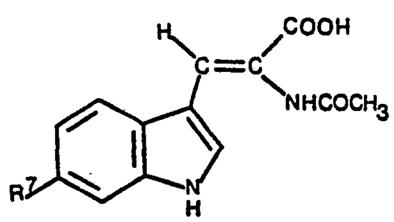

X

où $R^7$ représente un hydrogène, un groupe alcoyle inférieur ou un halogène, et est transformé en un composé de formule

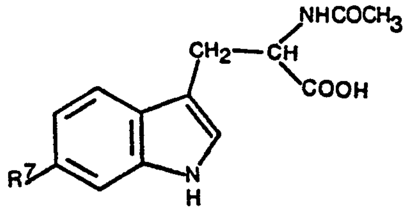

IX

où $R^7$ a la signification donnée ci-dessus.

23. Procédé selon la revendication 22, caractérisé en ce que $R^7$ représente le groupe méthyle.

**Claims**

1. A compound of the formula

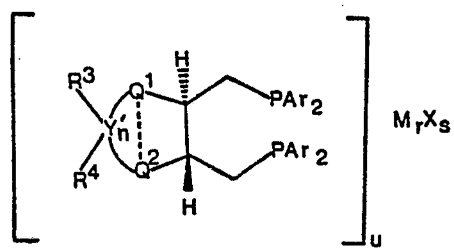

I

wherein $R^3$ and $R^4$ ar $C_1$—$C_{20}$ alkyl or aryl, namely phenyl, naphthyl, anthryl, phenanthryl or azulyl; Y' is carbon; $Q^1$ and $Q^2$ are methylene or oxygen; P is phosphorus; Ar is substituted or unsubstituted aryl, namely phenyl, naphthyl, anthryl, phenanthryl or azulyl; M is a Group Ib or IIb metal; X is halide; perchlorate, tetra(fluoro or chloro)borate, hexa(fluoro or chloro)phosphate, or hexa(fluoro or chloro)-antiomonate or tetraphenylborate; n is 0 or 1, with the proviso that when $n = 0$, $Q^1$ and $Q^2$ are methylene and the broken line is a carbon-carbon bond and when $n = 1$, $Q^1$ and $Q^2$ are oxygen where each oxygen is bonded to Y'; u is an integer from 1 to 3; r and s are 1 or 2 depending on the valence of M and the value of u or the dimers or oligomers thereof.

2. A compound according to claim 1 wherein $Q^1$ and $Q^2$ each represent oxygen.

3. A compound according to claim 1 or 2 wherein Ar represents m-tolyl, phenyl or 3,5-dimethylphenyl.

4. A compound according to one of claims 1—3 wherein M represents copper.

5. The compound of the formula

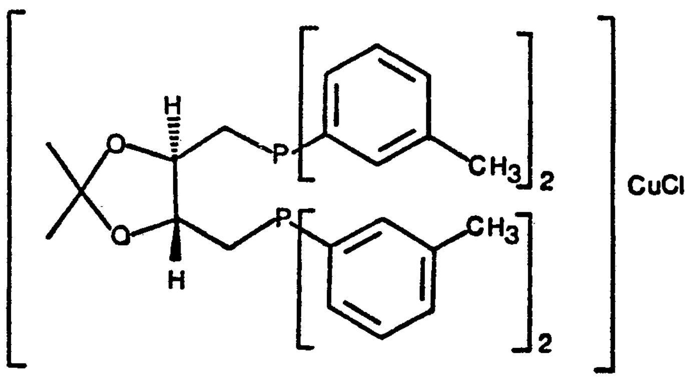

XV

6. The compound of the formula

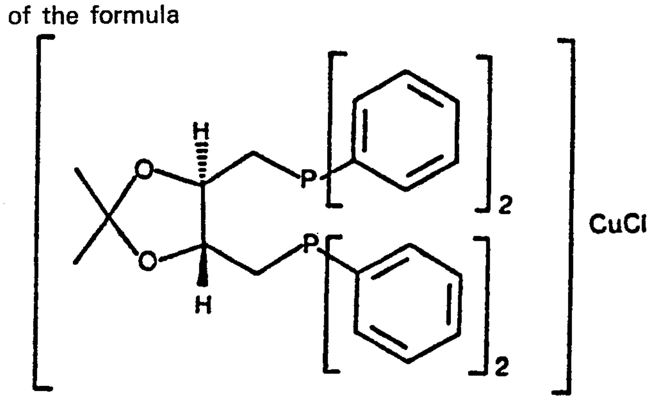

XVI

7. The compound of the formula

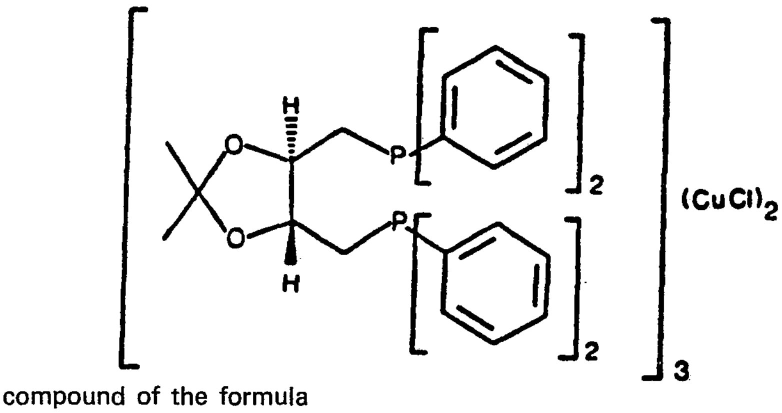

XVII

8. The compound of the formula

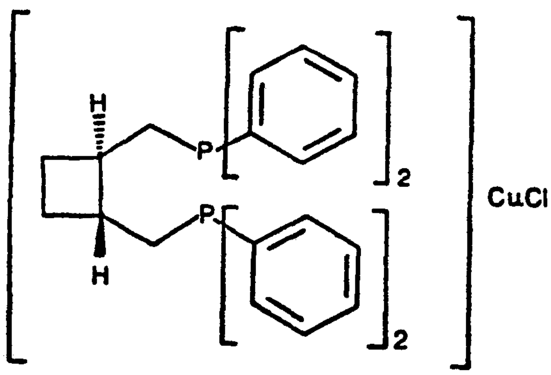

XVIII

9. The compound of the formula

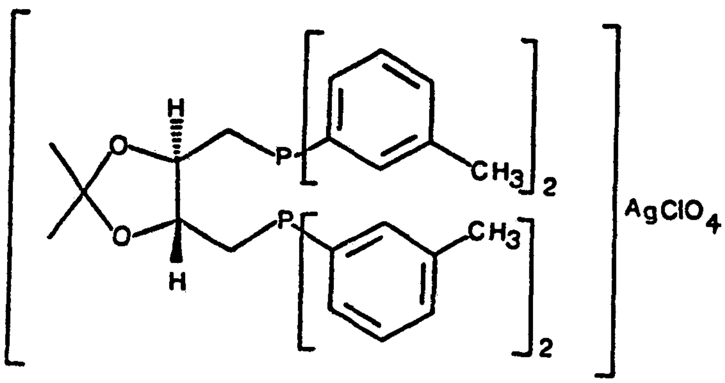

XIX

10. The compound of the formula

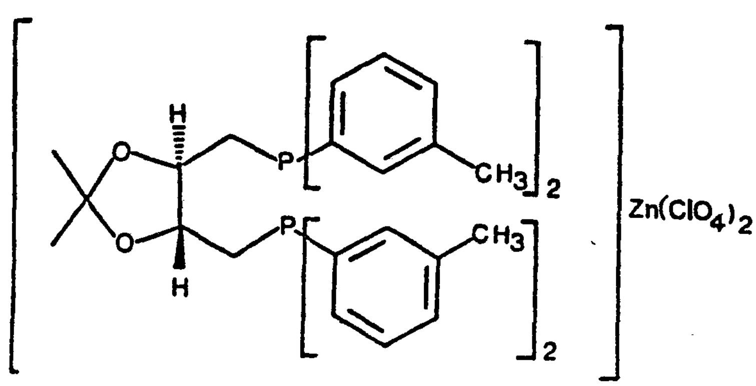

XX

11. The compound of the formula

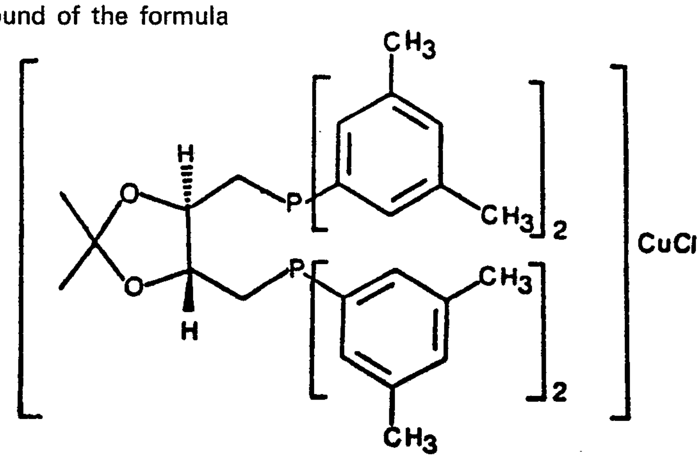

XXI

12. A process for the preparation of a compound of the formula

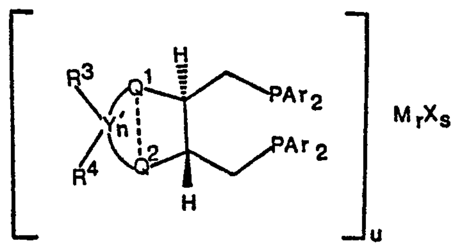

I

wherein the substituents have the meanings given in one of claims 1 to 11 or dimers or oligomers thereof, characterised in that one reacts a compound of the formula

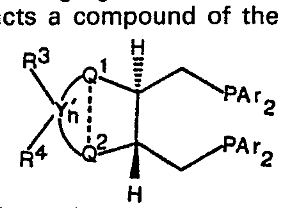

II

wherein $Q^1$, $Q^2$, $R^3$, $R^4$, Y′ Ar and n have the meanings given above; with a compound of the formula

$$M_rX_s$$

wherein X has the meaning given above, M is a Group Ib or IIb metal; r is 1 and s is 1 or 2 depending on the valence of M.

13. A process as claimed in claim 12 characterised in that the reaction is carried out in solution in a lower alkanol.

14. A process as claimed in claim 12 or claim 13 characterised in that the solvent is ethanol.

15. A process as claimed in claim 14, characterised in that the compound of formula II is prepared by treating a compound of the formula

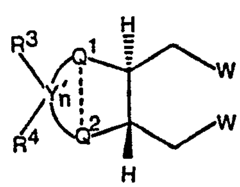

VIII

wherein $Q^1$, $Q^2$, $R^3$, $R^4$, Y′ and n have the meanings given above; and W is halogen with an alkali metal diaryl phosphide.

16. A process as claimed in claim 15 characterised in that the compound of formula VIII is prepared by treating a compound of the formula

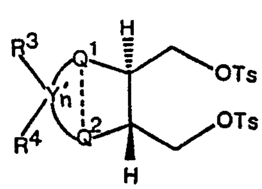

VII

wherein Ts is tosylate and $Q^1$, $Q^2$, $R^3$, $R^4$, Y' and n have the meanings give above, with a halogenating agent.

17. The use of a compound of the formula

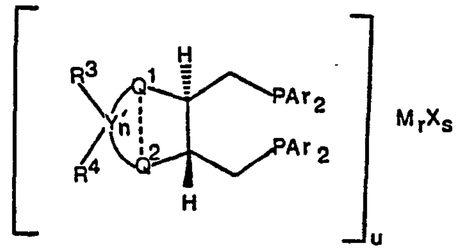

I

wherein the substituents have the meanings given in one of claims 1—11, or dimers or oligomers thereof, for the preparation of a hydrogenation catalyst by reaction with a salt or complex of a Group VIIIb metal as defined.

18. Use according to claim 17, characterised in that rhodium is used as the Group VIIIb metal.

19. Use according to claim 17, characterised in that palladium, platinium or ruthenium is used as the Group VIIIb metal.

20. Use according to claim 17, characterised in that the Group VIIIb metal salt or complex used is $\mu,\mu'$-dichloro-bis-(1,5-cyclooctadienerhodium) or $\mu,\mu$-dichloro-bis[bis-(ethylene)rhodium (I)].

21. A process for the preparation of a compound of the formula

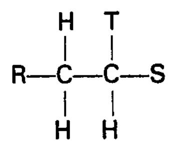

III

wherein R is alkyl, alkenyl, aryl, substituted or unsubstituted indolyl wherein said substituents are lower alkyl or halogen, S is substituted amino and T is lower alkyl, aryl, carboxy, lower alkoxycarbonyl or carboxamido characterised in that one hydrogenates a substrate of the formula

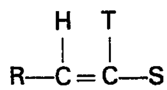

IV

wherein R, S and T have the meanings given above in a solvent medium employing a catalyst according to claim 17.

22. Use according to claim 21, characterised in that the compound of formula IV has the formula

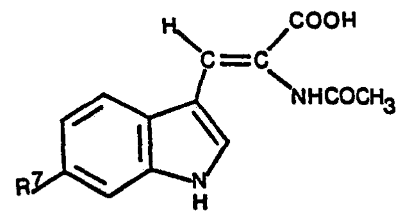

X

wherein $R^7$ represents hydrogen, lower alkyl or halogen and is transformed to a compound of the formula

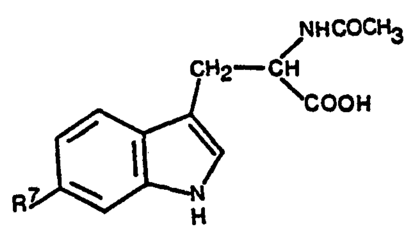

wherein $R^7$ has the meaning given above,

23. Use according to claim 22, characterised in that $R^7$ represents methyl.